# EUROPEAN PATENT SPECIFICATION

(11) **EP 4 174 286 B1**
(45) Date of publication and mention of the grant of the patent: **04.12.2024**
(21) Application number: 21425053.2
(22) Date of filing: 29.10.2021
(51) Int. Cl.: F01D 5/08, F01D 5/18, F01D 9/06, F02C 6/08

(54) **GAS TURBINE ASSEMBLY FOR POWER PLANT WITH IMPROVED ROTOR AND TURBINE BLADES COOLING AND METHOD FOR OPERATING THIS GAS TURBINE ASSEMBLY**
GASTURBINENANORDNUNG FÜR EIN KRAFTWERK MIT VERBESSERTER ROTOR- UND TURBINENSCHAUFELKÜHLUNG UND VERFAHREN ZUM BETRIEB DIESER GASTURBINENANORDNUNG
ENSEMBLE TURBINE À GAZ POUR CENTRALE ÉLECTRIQUE AVEC REFROIDISSEMENT AMÉLIORÉ DU ROTOR ET DES AUBES DE TURBINE ET PROCÉDÉ DE FONCTIONNEMENT DE CET ENSEMBLE TURBINE À GAZ

(43) Date of publication of application: 03.05.2023
(73) Proprietor: ANSALDO ENERGIA S.p.A., 16152 Genova (IT)
(72) Inventor: Bavassano, Francesco, 16152 GENOVA (IT); Tappani, Marco, 16152 GENOVA (IT)
(74) Representative: Studio Torta S.p.A.

(56) References cited:
- EP-A1- 3 037 674
- EP-A1- 3 093 432
- EP-A1- 3 147 451
- US-A1- 2012 087 784

## Description

### Field of the Invention

The present invention relates to the technical field of the gas turbine assemblies for power plant. As known, in these assemblies an incoming air flow is compressed in a compressor and then mixed with fuel (gas fuel and/or oil fuel) in a combustor to produce a hot gas flow to be expanded in a turbine. The rotation of the turbine generates a rotating work on a rotor in turn connected to a generator for power production. It is known to use part of the compressed air for cooling hot elements of the assembly, wherein this cooling air by-passes the combustion and is guided towards, for instance, the rotor cover and turbine blades. In this technical field, the present invention addresses the problem of how to improve the rotor and turbine cooling by using spilled compressed air.

### Description of prior art

As known, a gas turbine assembly for power plant comprises a compressor unit, a combustor unit and a turbine unit. The compressor unit is configured for compressing incoming air supplied at a compressor inlet. The compressed air leaving the compressor unit flows into a closed volume (called "plenum") and from there into the combustor unit. This combustor unit comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and flows by the turbine unit performing a rotating work on a rotor connected to a generator. Usually the same rotor, that could be made as a single piece or in form of a plurality of adjacent rotor disks, supports also the rotating parts of the compressor assembly and it defines the main axis of the system. As known, the turbine unit and the compressor unit comprise a plurality of rows of rotating blades that are interposed by a plurality of rows of stator vanes. The rotating blades are supported by the rotor whereas the stator vanes are supported by a casing (called "vane carrier") that is concentric and surrounding the gas turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine performs two combustion stages in series. Today at least two different kinds of sequential gas turbines are known. According to a first embodiment, the gas turbine comprises a first combustor and a second combustor that are annular shaped and are physically separated by a turbine, called high pressure turbine. Downstream the second combustor a second turbine is provided (called low pressure turbine).

According to a second embodiment, the sequential gas turbine is not provided with the high-pressure turbine and the combustor assembly is realized in form of a plurality of can-combustors wherein each can-combustor comprises a first combustor and a second combustor arranged directly one downstream the other inside a common casing can-shaped. These two examples of gas turbine assemblies have been cited only as non-limiting examples wherein the present invention can be applied. Indeed, as preferred example of gas turbine suitable to be improved by the present invention, the gas turbine assembly may involve a single stage of combustion with a single annular combustion chamber.

As known in this technical field, the terms "circumferential, radial, axial, outer and inner" refer to the rotor or assembly axis (that is parallel to the main air/hot gas flow). The terms "downstream and upstream" refer to the main direction of the air/hot gas flowing from the compressor to the turbine.

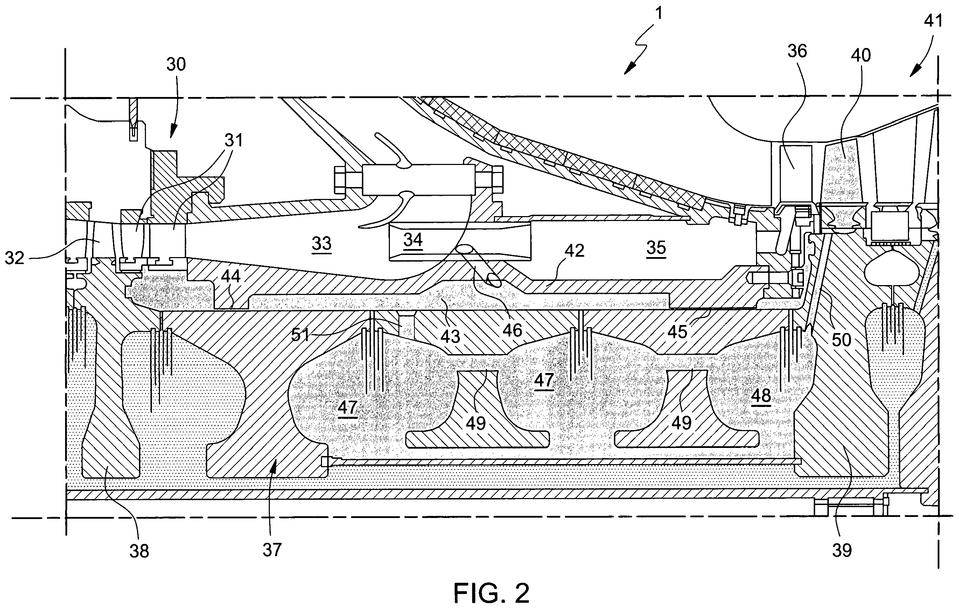

For cooling reasons it is common practice to use part of the compressed air wherein this cooling air by-passes the combustor and is fed to some hot components to be cooled. According to the prior art practice, that can be represented for instance by the enclosed figure 2 disclosing an Applicant solution or by the disclosure of the prior art document EP3006668, the compressed air is fed by the compressor outlet to a diffuser and from there to a plenum before entering the combustor. According to the prior art practice, part of the compressor air flowing into the diffusor is spilled from the main flow and directed by a swirl line towards an annulus extending from the compressor to the turbine and provided between the rotor and a rotor cover. With the term "swirl line" we mean a plurality of channels configured to apply a swirl to the spilled air flow that before leaving the compressor has been axially forced by the two last row of compressor vanes. According to figure 2, the a line is provided to connect a guide tube, arranged between the diffuser and a plenum, to the annulus. The annulus of figure 2 is closed downstream and upstream by seals that are configured for allowing a leakage of air respectively towards the last and/or the second last row of compressor vanes for purging purposes and towards the first row turbine vanes for sealing purposes. From the annulus the swirled spilled air is fed to a volume obtained inside the rotor and from there is directed to the first row of turbine blades. As disclosed in figure 2, the rotor comprises a plurality of adjacent disks wherein each couple of adjacent disks (at least between the compressor and the turbine) form a cooling volume. In this example, the swirled spilled air is fed to a rotor volume substantially arranged in a middle position of the rotor and from there via axial channels flow towards the rotor disk supporting the first row of blades. A discharge line is provided for feeding the air to the blades from this cooling volume.

According to the disclosure of EP3006668, the annulus extending from the compressor to the turbine is divided in two adjacent sub-annulus volumes divided by a seal. As for the previous example, the downstream end of the downstream sub-annulus is provided with a seal configured for allowing a leakage of the air towards the first row of turbine vanes. This downstream sub-annulus is connected to the plenum by a first swirl line (reference 12) so that the compressed air fed into the plenum by the diffusor can enter the downstream sub-annulus. A downstream discharge line (reference 15) is provided for connecting the downstream sub-annulus to a rotor volume obtained in the rotor disk supporting the first row of turbine blades. Indeed, from this rotor volume the air reached the first row of turbine blades. The upstream sub-annulus is connected to the plenum by an upstream or second swirl line (reference 11) so that the compressed air fed into the plenum by the diffusor can enter the upstream sub-annulus. The upstream end of the upstream sub-annulus is connected to the compressor so that, after cooling the rotor, the air is again introduced in the main flow leaving the compressor.

Thus, in both prior art disclosures above described the diffusor or the plenum are in fluid connection via swirl lines to the annulus. The fact of providing the assembly with these swirl lines involves some drawbacks in terms of mechanical processing required. Moreover, the high numbers of deviations imposed to the air flow between the compressor to the turbine generates an high pressure loss that implies an higher amount of air to be used for cooling.

EP3037674 relates to a guide vane element for use in a turbo compressor of such an engine and to a method for cooling components of the engine.

US2012087784 relates to gas turbine systems, and more particularly to inducers for supplying cooling medium to various components in a gas turbine system.

EP3093432 relates to the technology of gas turbines, in particular to a method for cooling a gas turbine.

EP3147451 relates a system for cooling a gas turbine, which is capable of improving the efficiency of a gas turbine by individually supplying cooling air to each of a plurality of turbine disks.

### Disclosure of the invention

The invention relates to a gas turbine assembly for power plant according to claim 1.

Preferably, the compressor comprises an outlet and a diffuser downstream connected to the compressor outlet. This diffuser is configured for guiding the air leaving the compressor towards a combustor unit. Usually the two last rows of vanes (the last row is called "outlet guide vanes") are configured for forcing the flow along the axial direction. The single annulus of the invention is directly connected to the compressor in an upstream position with respect to the compressor outlet (preferably downstream the last rotating row of compressor blades) and both the diffuser and the plenum are fluidly separated from the single annulus (no line is present between diffuser/plenum and the single annulus). Thus, according the invention the air is fed to the annulus directly spilled from the compressor and not from the diffuser or the plenum downstream the compressor. In this way the air used for cooling is itself provided with a swirl and therefore no additional swirl lines or devices are required for this scope.

Preferably, the compressor outlet comprises two rows of vanes configured for axially guiding the air before leaving the compressor. In this configuration, the single annulus is connected to the compressor in a position directly upstream with respect to these two last rows of vanes.

Preferably, the rotor comprises a plurality of adjacent disks and the cooling volume foregoing mentioned is obtained between two adjacent rotor disks wherein the downstream disk of this couple supports the first row of turbine blades.

Preferably, the single annulus comprises a curved inlet portion upstream connected to the compressor.

The invention has been foregoing described in structural terms. However, the invention is also defined in terms of a method of operating the gas turbine assembly according to claim 8.

This method allows to understand the differences between the invention and the prior art. In the cited prior document the annulus is fluidly connected to the compressor but this connection is used to fed air from the annulus into the compressor and not vice-versa as the present invention.

Thus, as a not limiting list of the advantage of the invention, the cooling of the rotor or rotor disks between the compressor and the turbine are improved and a less amount of air is required for cooling the first row of turbine blades due to a higher swirl preserved from the compressor to the turbine. Indeed, a higher swirl means a lower relative temperature of the air with respect to the rotating parts of the assembly.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a not-limiting example of a gas turbine that can be improved by the present invention;
- figure 2 is a schematic enlarged view of the portion II of figure 1 wherein an example of the prior art is disclosed;

- figure 3 is a schematic enlarged view of the portion II of figure 1 duly modified according to the present invention;
- figure 4 discloses a different embodiment of gas turbine not part of the invention.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

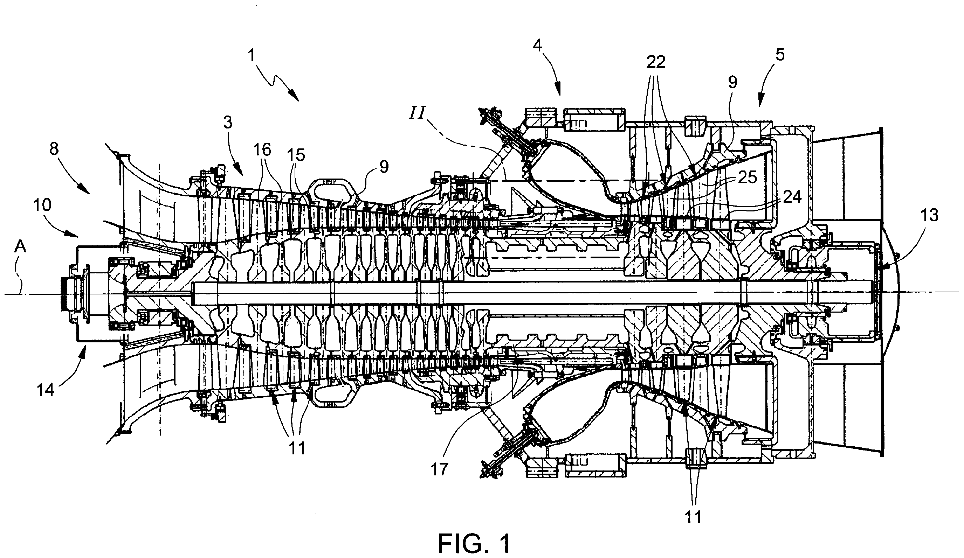

Reference is made to figure 1 which is a schematic view of a not-limiting example of a gas turbine assembly for power plant that can be improved by the present invention. In figure 1 the gas turbine assembly 1 comprises a compressor unit 3, a combustion unit 4, a turbine unit 5 and a generator (for simplicity, not shown in the attached figures). The rotating parts of the compressor 3, turbine 5 and generator are supported by a common rotor 8, which is housed in a casings 9 and extends along an axis A. In figure 1, the rotor 8 comprises a front shaft 10, a rear shaft 13 and in between a plurality of adjacent rotor disks 15 clamped as a pack by a central tie rod 14. As an alternative, the rotor disks may be welded together. Each rotor disk 15 supports a row of blades 16. The casing 9 comprises a plurality of stator rows of vanes 22 alternated with the rotating rows of blades 16.

Reference is made to figure 2 that is a schematic enlarged view of the portion II of figure 1. This view refers to the prior art practice. Figure 2 discloses a downstream portion of the compressor 30 and an upstream portion of the turbine 41. In particular, figure 2 discloses the two last rows of compressor vanes 31, the last row of compressor blades 32, the first row of turbine vanes 36 and the first row of turbine blades 40. As known, the two last rows of compressor vanes 31 are configured for axially guiding the air flow leaving the compressor. Downstream the compressor 30 a diffusor 33 is provided for guiding the compressed air towards the combustor. Reference 34 refers to a guide pipe configured for guiding part of the compressed air into a plenum 35 wherein the air can reach the first row of turbine vanes 36 for cooling reason. Figure 2 also discloses part of a rotor 37 in form of a plurality of adjacent disks. References 38 and 39 refer respectively to a rotor disk supporting the last row of compressing blades 32 and to a rotor disk supporting the first row of turbine blades 40. In the portion between the compressor outlet and the turbine inlet, the rotor 37 is coupled to a rotor cover 42. This rotor cover and the corresponding portion of the rotor 37 defines an annulus 43, i.e. a volume closed upstream by an upstream seal 44 and downstream by a downstream seal 45. The annulus 43 is fed by cooling air and these seals 44 45 are configured for allowing an air leakage towards the last row of compressor vanes 31 and downstream the first row of turbine vanes 36 respectively for purging and sealing purposes. The cooling air fed in the annulus 43 is part of the compressed air passing by the pipe 34. Indeed, between the pipe 34 and the annulus 43 a swirl line 46 is provided for feeding the air to the annulus 43 and for imposing to the air a swirl effect. As disclosed in figure 2, each couple of adjacent rotor disks are shaped to define cooling volumes 47. Reference 48 refers to the cooling volume partially obtained in the rotor disk 39 supporting the first row of turbine blades 40. Between this cooling volume 48 and the upstream cooling volumes 47 axially channels are provided 49 for allowing the cooling air entering an upstream cooling volume 47 to reaches the cooling volume 48 and from there the first row of blade 40 via a discharge line 50. Reference 51 refers to a line connecting the annulus 43 to an upstream cooling volume 47.

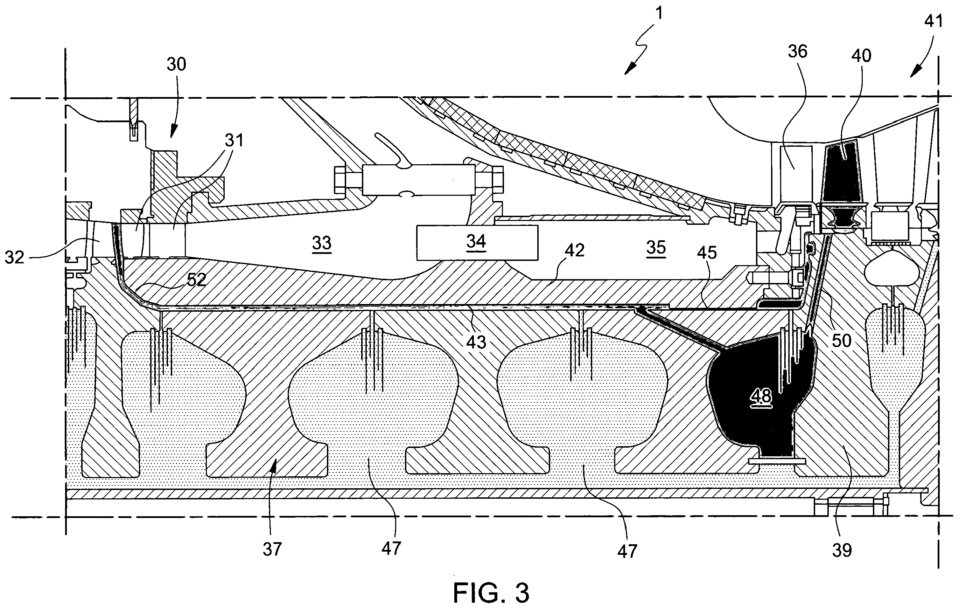

Reference is now made to figure 3 that is a schematic enlarged view of the portion II of figure 1 duly modified according to the present invention. In this sense the same components disclosed in figure 2 have been represented in figure 3 with the same numerical referral. According to figure 3, and to the invention, the annulus 43 and the diffuser 33/plenum 35 are not in fluid connection. Indeed, the annulus 43 is fed by compresses air spilled directed from the compressor, in this example directly upstream the last two rows of vanes 31 and downstream the last compressor row of blades 32. Preferably, as presented, the inlet portion 52 of the annulus 43 is curved for minimizing the pressure loss. The cooling volume 48 obtained in the rotor disk 39 supporting the turbine blades 40 is directly fed by air leaving the annulus 43 and not coming from the upstream volumes 47 as per the previous figure. Indeed, reference 51 refers to a discharge line connecting the cooling volume 48 to the annulus 43. The first turbine vanes 36 are fed with air via the seal 45 as per the previous figure.

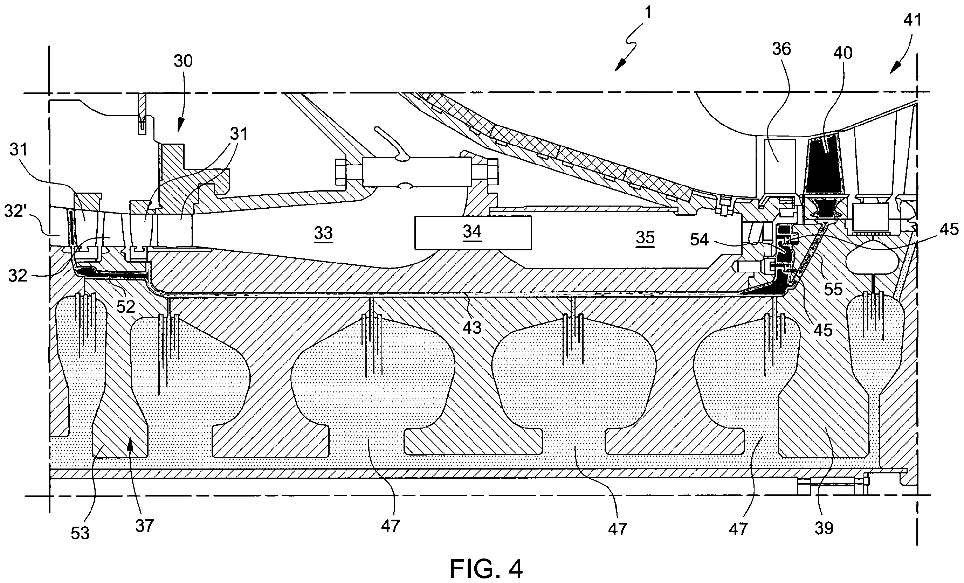

Finally, figure 4 discloses a different embodiment of a gas turbine not part of the invention. The same elements discloses in figures 3 and 4 have been represented with the same numerical referral. The two different independent solutions refer respectively the upstream portion and the downstream portion of the annulus 43, i.e. the gap fed by cooling air obtained between the rotor (in form of a plurality of rotor disks) and the rotor cover. At the downstream portion, the discharge line 51 have been removed and the annulus 43 has been prolonged up to the first rotor turbine disk where a radial space 54 is present between the firs turbine vane row 36 and the firs turbine blade row 40. As disclosed the seal 45 has been replaced in this radial space 54. In figure 4 the first firs turbine blade row 40 is fed by air coming directly from the prolonged portion of the annulus 43 via the discharge line 55 and not more from the volume 48 (that become as the volumes 47 of figure 3). Indeed, in figure 4 the line 55 is obtained in the first turbine disk 39 connecting directly the prolonged portion of the annulus 43 to the firs turbine blade row 40. The second difference at the upstream portion of the annulus 43 refer the inlet portion 52. In this case inlet portion 52 is no more fed by air directly downstream the last compressor blade row 32 but it is fed by air directly downstream the second last compressor blade row 32'. In this case the inlet portion 52 is realized in form of a line (i.e. a plurality of holes for instance) obtained in the last rotor compressor disk 53. As foregoing mentioned, these upstream and downstream solutions are independent, i.e. may be together or individually implemented.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A gas turbine assembly for power plant, the gas turbine (1) comprising:
- a rotor (37) having an axis (A);
- a compressor (30);
- a turbine (41);
- a rotor cover (42);
- a single annulus (43) between the rotor (37) and the rotor cover (42);
wherein
the single annulus (43) is connected upstream to the compressor (30) for being fed by air spilled from the compressor (30) and downstream to discharge lines (50, 51, 55) for feeding the compressor air to the turbine (41);
**characterized in that**
a first discharge line (51) is downstream connected to a cooling volume (48) obtained inside the rotor (37) and from there the air is fed to the turbine (41) via a second discharge line (50);
wherein the turbine (41) comprises a first row of vanes (36); at the downstream end of the single annulus (45) between the rotor (37) and the rotor cover (42) being provided a seal (45) configured for allowing leakage of air from the annulus (43) towards a stator-rotor cavity between the first row of turbine vanes (36) and the first row of turbine blades (40).

2. Gas turbine assembly according to any foregoing claims, wherein the compressor (30) comprises an outlet and a diffuser (33) downstream connected to the compressor outlet; the single annulus (43) being connected to the compressor (30) in a position upstream with respect to the compressor outlet.

3. Gas turbine assembly according to claim 2, wherein downstream the last row of compressor blades (32) the compressor outlet comprises one or two rows of vanes (31) configured for axially guiding the compressor air; the single annulus (43) being connected to the compressor in a position directly downstream the last row of compressor blades (32).

4. Gas turbine assembly according to claim 2, wherein the compressor comprises a second last row of compressor blades (32); the single annulus (43) being connected to the compressor in a position directly downstream the second last row of compressor blades.

5. Gas turbine assembly according to claim 2 or 3, wherein the diffuser (33) is downstream connected to a plenum (35), the plenum (35) being fluidly separated from the single annulus (43).

6. Gas turbine assembly according to any one of the foregoing claims from 1 to 5, wherein the rotor (37) comprises a plurality of adjacent disks (38, 39), the cooling volume (48) being obtained between two adjacent rotor disks wherein the downstream disk (39) of this couple of disks supports a first row of turbine blades (40).

7. Gas turbine assembly according to any one of the foregoing claims, wherein the single annulus (43) comprises a curved inlet portion (52) upstream connected to the compressor (30).

8. Method for operating a gas turbine assembly for power plant, the method comprising the step of:
a) providing a gas turbine assembly (1) comprising:
- a rotor (37) having an axis;
- a compressor (30);
- a turbine (41);
- a rotor cover (42);
- a single annulus (43) between the rotor (37) and the rotor cover (42), the single annulus (43) being connected upstream to the compressor (30) and downstream to a discharge lines (50, 51, 55) connecting the annulus (43) to the turbine (41);
b) spilling air from the compressor (30) and feeding the spilled air directly into the single annulus (43);
**characterized in that** the method also comprises the step of
c) feeding the spilled air from the single annulus (43) into a cooling volume (48) obtained in the rotor via the first discharge line (51) and from there via a second discharge line (50) to the turbine (41) ;
wherein the turbine of step a) comprises first row of turbine vanes (36); according to step a) between the rotor (37) and the rotor cover (42) at the single annulus outlet a seal (45) is provided; the method comprises also the step of:
d) leaking air from the annulus (43) via the seal (45) towards a stator-rotor cavity between the first row of turbine vanes (36) and the first row of turbine blades (40).

9. Method as claimed in claim 8, wherein the compressor of step a) comprises an outlet downstream connected to a diffuser (33); the step b) being performed by spilling air from the compressor (30) in a position upstream with respect to the compressor outlet.

10. Method as claimed in claim 9, wherein the compressor outlet of step a) comprises two end rows of compressor vanes (31) configured for axially guiding the compressor air; the step b) being performed by spilling air from the compressor (30) upstream with respect to these two end rows of vanes (31).

11. Method as claimed in any one of the foregoing claims from 8 to 10, wherein the turbine of step a) comprises a first row of turbine blades (40); the step c) being performed by feeding the spilled air to the first row of turbine blades (40).

12. Method as claimed in claim 10 or 11, wherein the rotor of step c) comprises a plurality of adjacent disks (38, 39), the cooling volume (48) being obtained between two adjacent rotor disks wherein the downstream disk (39) of these couple of disks supports the first row of turbine blades (40).

13. Method as claimed in any one of the foregoing claims from 8 to 12, wherein the single annulus (43) of step a) between the rotor cover and the rotor comprises a curved inlet portion (52) upstream connected to the compressor (30).

## Patentansprüche

1. Gasturbinenanordnung für ein Kraftwerk, wobei die Gasturbine (1) umfasst:
- einen Rotor (37), der eine Achse (A) aufweist;
- einen Verdichter (30);
- eine Turbine (41);
- eine Rotorabdeckung (42);
- einen einzelnen Ringraum (43) zwischen dem Rotor (37) und der Rotorabdeckung (42);
wobei
der einzelne Ringraum (43) stromaufwärts mit dem Verdichter (30) verbunden ist, um mit aus dem Verdichter (30) abgelassener Luft gespeist zu werden, und stromabwärts mit Abgabeleitungen (50, 51, 55), um die Verdichterluft der Turbine (41) zuzuführen;
**dadurch gekennzeichnet, dass**
eine erste Abgabeleitung (51) stromabwärts mit einem im Inneren des Rotors (37) erhaltenen Kühlvolumen (48) verbunden ist und von dort die Luft über eine zweite Abgabeleitung (50) der Turbine (41) zugeführt wird;
wobei die Turbine (41) eine erste Reihe von Leitschaufeln (36) umfasst; wobei am stromabwärts gelegenen Ende des einzelnen Ringraums (45) zwischen dem Rotor (37) und der Rotorabdeckung (42) eine Dichtung (45) vorgesehen ist, die dazu konfiguriert ist, ein Entweichen von Luft aus dem Ringraum (43) in Richtung zu einem Stator-Rotor-Hohlraum zwischen der ersten Reihe von Turbinenleitschaufeln (36) und der ersten Reihe von Turbinenschaufeln (40) zu ermöglichen.

2. Gasturbinenanordnung nach einem der vorangehenden Ansprüche, wobei der Verdichter (30) einen Auslass und einen stromabwärts mit dem Verdichterauslass verbundenen Diffusor (33) umfasst; wobei der einzelne Ringraum (43) mit dem Verdichter (30) an einer Position stromaufwärts in Bezug auf den Verdichterauslass verbunden ist.

3. Gasturbinenanordnung nach Anspruch 2, wobei stromabwärts der letzten Reihe von Verdichterschaufeln (32) der Verdichterauslass eine oder zwei Reihen von Leitschaufeln (31) umfasst, die dazu konfiguriert sind, die Verdichterluft axial zu führen; wobei der einzelne Ringraum (43) mit dem Verdichter an einer Position direkt stromabwärts der letzten Reihe von Verdichterschaufeln (32) verbunden ist.

4. Gasturbinenanordnung nach Anspruch 2, wobei der Verdichter eine vorletzte Reihe von Verdichterschaufeln (32) umfasst; wobei der einzelne Ringraum (43) mit dem Verdichter an einer Position direkt stromabwärts der vorletzten Reihe von Verdichterschaufeln verbunden ist.

5. Gasturbinenanordnung nach Anspruch 2 oder 3, wobei der Diffusor (33) stromabwärts mit einer Sammelkammer (35) verbunden ist, wobei die Sammelkammer (35) strömungstechnisch von dem einzelnen Ringraum (43) getrennt ist.

6. Gasturbinenanordnung nach einem der vorangehenden Ansprüche 1 bis 5, wobei der Rotor (37) mehrere benachbarte Scheiben (38, 39) umfasst, wobei das Kühlvolumen (48) zwischen zwei benachbarten Rotorscheiben erhalten wird, wobei die stromabwärts gelegene Scheibe (39) dieses Scheibenpaares eine erste Reihe von Turbinenschaufeln (40) trägt.

7. Gasturbinenanordnung nach einem der vorangehenden Ansprüche, wobei der einzelne Ringraum (43) einen gekrümmten Einlassabschnitt (52) umfasst, der stromaufwärts mit dem Verdichter (30) verbunden ist.

8. Verfahren zum Betreiben einer Gasturbinenanordnung für ein Kraftwerk, wobei das Verfahren die Schritte umfasst:
a) Bereitstellen einer Gasturbinenanordnung (1), umfassend:
- einen Rotor (37), der eine Achse aufweist;
- einen Verdichter (30);
- eine Turbine (41);
- eine Rotorabdeckung (42);
- einen einzelnen Ringraum (43) zwischen dem Rotor (37) und der Rotorabdeckung (42), wobei der einzelne Ringraum (43) stromaufwärts mit dem Verdichter (30) und stromabwärts mit Abgabeleitungen (50, 51, 55) verbunden ist, die den Ringraum (43) mit der Turbine (41) verbinden;
b) Ablassen von Luft aus dem Verdichter (30) und Zuführen der abgelassenen Luft direkt in den einzelnen Ringraum (43);
**dadurch gekennzeichnet, dass** das Verfahren auch den Schritt umfasst:
c) Zuführen der abgelassenen Luft aus dem einzelnen Ringraum (43) in ein im Rotor erhaltenes Kühlvolumen (48) über die erste Abgabeleitung (51) und von dort über eine zweite Abgabeleitung (50) zu der Turbine (41) ;
wobei die Turbine von Schritt a) eine erste Reihe von Leitschaufeln (36) umfasst; wobei gemäß Schritt a) zwischen dem Rotor (37) und der Rotorabdeckung (42) an dem Einzelringraumauslass 3 eine Dichtung (45) vorgesehen ist; wobei das Verfahren auch den Schritt umfasst:
d) Entweichen von Luft aus dem Ringraum (43) über die Dichtung (45) in Richtung zu einem Stator-Rotor-Hohlraum zwischen der ersten Reihe von Turbinenleitschaufeln (36) und der ersten Reihe von Turbinenschaufeln (40).

9. Verfahren nach Anspruch 8, wobei der Verdichter von Schritt a) einen Auslass umfasst, der stromabwärts mit einem Diffusor (33) verbunden ist; wobei der Schritt b) durchgeführt wird, indem Luft aus dem Verdichter (30) an einer Position stromaufwärts in Bezug auf den Verdichterauslass abgelassen wird.

10. Verfahren nach Anspruch 9, wobei der Verdichterauslass von Schritt a) zwei Endreihen von Verdichterleitschaufeln (31) umfasst, die dazu konfiguriert sind, die Verdichterluft axial zu führen; wobei der Schritt b) durchgeführt wird, indem Luft aus dem Verdichter (30) stromaufwärts in Bezug auf diese zwei Leitschaufelreihen (31) abgelassen wird.

11. Verfahren nach einem der vorangehenden Ansprüche 8 bis 10, wobei die Turbine von Schritt a) eine erste Reihe von Turbinenschaufeln (40) umfasst; wobei der Schritt c) durchgeführt wird, indem die abgelassene Luft der ersten Reihe von Turbinenschaufeln (40) zugeführt wird.

12. Verfahren nach Anspruch 10 oder 11, wobei der Rotor von Schritt c) mehrere benachbarte Scheiben (38, 39) umfasst, wobei das Kühlvolumen (48) zwischen zwei benachbarten Rotorscheiben erhalten wird, wobei die stromabwärts gelegene Scheibe (39) dieses Scheibenpaares die erste Reihe von Turbinenschaufeln (40) trägt.

13. Verfahren nach einem der vorangehenden Ansprüche 8 bis 12, wobei der einzelne Ringraum (43) von Schritt a) zwischen der Rotorabdeckung und dem Rotor einen gekrümmten Einlassabschnitt (52) umfasst, der stromaufwärts mit dem Verdichter (30) verbunden ist.

## Revendications

1. Ensemble turbine à gaz pour centrale électrique, la turbine à gaz (1) comprenant :
un rotor (37) ayant un axe (A) ;
un compresseur (30) ;
une turbine (41) ;
un couvercle de rotor (42) ;
un anneau unique (43) entre le rotor (37) et le couvercle de rotor (42);
dans lequel :
l'anneau unique (43) est raccordé, en amont, au compresseur (30) pour être alimenté par l'air déversé depuis le compresseur (30) et en aval, à des conduites de décharge (50, 51, 55) pour alimenter l'air de compresseur à la turbine (41) ;
**caractérisé en ce que** :
une première conduite de décharge (51) est raccordée en aval à un volume de refroidissement (48) obtenu à l'intérieur du rotor (37) et à partir de là, l'air est alimenté à la turbine (41) via une deuxième conduite de décharge (50) ;
dans lequel la turbine (41) comprend une première rangée de pales (36) ; à l'extrémité en aval de l'anneau unique (45) entre le rotor (37) et le couvercle de rotor (42), on prévoit un joint d'étanchéité (45) configuré pour permettre la fuite d'air de l'anneau (43) vers une cavité de stator-rotor entre la première rangée de pales de turbine (36) et la première rangée d'aubes de turbine (40).

2. Ensemble turbine à gaz selon l'une quelconque des revendications précédentes, dans lequel le compresseur (30) comprend une sortie et un diffuseur (33) en aval raccordé à la sortie de compresseur ; l'anneau unique (43) étant raccordé au compresseur (30) dans une position en amont par rapport à la sortie de compresseur.

3. Ensemble turbine à gaz selon la revendication 2, dans lequel en aval de la dernière rangée d'aubes de compresseur (32), la sortie de compresseur comprend une ou deux rangées de pales (31) configurées pour guider axialement l'air de compresseur ; l'anneau unique (43) étant raccordé au compresseur dans une position directement en aval de la dernière rangée d'aubes de compresseur (32).

4. Ensemble turbine à gaz selon la revendication 2, dans lequel le compresseur comprend une deuxième dernière rangée d'aubes de compresseur (32) ; l'anneau unique (43) étant raccordé au compresseur dans une position directement en aval de la deuxième dernière rangée d'aubes de compresseur.

5. Ensemble turbine à gaz selon la revendication 2 ou 3, dans lequel le diffuseur (33) est raccordé, en aval, à un plénum (35), le plénum (35) étant séparé, de manière fluidique, de l'anneau unique (43).

6. Ensemble turbine à gaz selon l'une quelconque des revendications 1 à 5, dans lequel le rotor (37) comprend une pluralité de disques (38, 39) adjacents, le volume de refroidissement (48) étant obtenu entre deux disques de rotor adjacents, dans lequel le disque (39) en aval de cette paire de disques supporte une première rangée d'aubes de turbine (40).

7. Ensemble turbine à gaz selon l'une quelconque des revendications précédentes, dans lequel l'anneau unique (43) comprend une partie d'entrée courbée (52) raccordée, en amont, au compresseur (30).

8. Procédé pour actionner un ensemble turbine à gaz pour centrale électrique, le procédé comprenant l'étape comprenant le fait de :
a) prévoir un ensemble turbine à gaz (1) comprenant :
un rotor (37) ayant un axe ;
un compresseur (30) ;
une turbine (41) ;
un couvercle de rotor (42) ;
un anneau unique (43) entre le rotor (37) et le couvercle de rotor (42), l'anneau unique (43) étant raccordé, en amont, au compresseur (30) et en aval, à des conduites de décharge (50, 51, 55) raccordant l'anneau (43) à la turbine (41) ;
b) déverser l'air du compresseur (30) et alimenter l'air déversé directement dans l'anneau unique (43) ;
**caractérisé en ce que** le procédé comprend également l'étape comprenant le fait de :
c) alimenter l'air déversé de l'anneau unique (43) dans un volume de refroidissement (48) obtenu dans le rotor, via la première conduite de décharge (51) et de là, via une deuxième conduite de décharge (50), à la turbine (41) ;
dans lequel la turbine de l'étape a) comprend une première rangée de pales de turbine (36) ; selon l'étape a) entre le rotor (37) et le couvercle de rotor (42), au niveau de la sortie de l'anneau unique, on prévoit un joint d'étanchéité (45) ; le procédé comprend également l'étape comprenant le fait de :
d) laisser s'échapper l'air de l'anneau (43) via le joint d'étanchéité (45) vers une cavité de stator-rotor entre la première rangée de pales de turbine (36) et la première rangée d'aubes de turbine (40).

9. Procédé selon la revendication 8, dans lequel le compresseur de l'étape a) comprend une sortie raccordée, en aval, à un diffuseur (33) ; l'étape b) étant réalisée en déversant de l'air du compresseur (30) dans une position en amont par rapport à la sortie de compresseur.

10. Procédé selon la revendication 9, dans lequel la sortie de compresseur de l'étape a) comprend deux rangées d'extrémité de pales de compresseur (31) configurées pour guider axialement l'air de compresseur ; l'étape b) étant réalisée en déversant l'air du compresseur (30) en amont par rapport à ces deux rangées d'extrémité de pales (31).

11. Procédé selon l'une quelconque des revendications 8 à 10, dans lequel la turbine de l'étape a) comprend une première rangée d'aubes de turbine (40) ; l'étape c) étant réalisée en alimentant l'air déversé à la première rangée d'aubes de turbine (40).

12. Procédé selon la revendication 10 ou 11, dans lequel le rotor de l'étape c) comprend une pluralité de disques (38, 39) adjacents, le volume de refroidissement (48) étant obtenu entre deux disques de rotor adjacents, dans lequel le disque en aval (39) de cette paire de disques supporte la première rangée d'aubes de turbine (40).

13. Procédé selon l'une quelconque des revendications 8 à 12, dans lequel l'anneau unique (43) de l'étape a) entre le couvercle de rotor et le rotor comprend une partie d'entrée courbée (52) raccordée, en amont, au compresseur (30).
